# EUROPÄISCHE PATENTANMELDUNG

(11) **EP 1 344 909 A2**
(43) Veröffentlichungstag der Anmeldung: **17.09.2003**
(21) Anmeldenummer: 03004578.5
(22) Anmeldetag: 28.02.2003
(51) Int. Cl.: F01N 3/027, F01N 3/035

(54) **Verfahren zum Betreiben eines Diesel-Partikelfilters und Einrichtung zur Durchführung des Verfahrens**

(30) Priorität: 12.03.2002 DE 10210881
(71) Anmelder: ADAM OPEL AG, 65423 Rüsselsheim (DE)
(72) Erfinder: Mönnig, Ronny, 65183 Wiesbaden (DE); Peters, Bruce, Dr., 10133 Torino (IT); Zima, Peter, Dr., 55130 Mainz (DE)

(57) **Zusammenfassung**

Die Erfindung betrifft ein Verfahren zum Betreiben eines Partikelfilters in der Abgasanlage einer Diesel-Brennkraftmaschine, wobei der Partikelfilter einen keramischen Filterkörper mit einer katalytischen Beschichtung und elektrische Heizmittel an Partikelablagerungsstellen aufweist.

Um die schädlichen Bestandteile der Abgasemission insbesondere während des Startvorganges zu reduzieren, wird vorgeschlagen, die Heizmittel vor dem eigentlichen Motor-Startvorgang (6) zu aktivieren.

Die HC-Anteile, wie sie sich üblicherweise entsprechend dem durchgezogenen Linienzug (2) im Diagramm nach Figur 1 beim Start der Brennkraftmaschine einstellen, können dadurch auf den gemäß dem gestrichelten Linienzug (3) ersichtlichen Wert reduziert werden.

Ähnlich deutliche Reduzierungen werden beim CO-Anteil des Abgases während der Startphase erreicht.

Die Erfindung betrifft weiterhin eine Einrichtung zur Durchführung des vorgenannten Verfahrens. Sie weist ein elektrisches Steuerteil zum Einschalten des Anlassmotors auf, wobei ein Sensor die Temperatur der Heizmittel erkennt und erst nach Überschreiten einer vorgegebenen Temperaturschwelle das Einschalten des Anlassmotors erfolgt.

## Beschreibung

Die Erfindung betrifft ein Verfahren zum Betreiben eines Diesel-Partikelfilters gemäß dem Oberbegriff des Patentanspruches 1 sowie einer Einrichtung zur Durchführung dieses Verfahrens.

Ein Partikelfilter der gattungsgemäßen Art ist mit DE 100 03 816 A1 beschrieben. Bei diesem regenerierbaren Partikelfilter weist der Filterkörper eine Vielzahl von über den Querschnitt verteilten in Strömungsrichtung verlaufenden Kanälen auf, wobei abwechselnd ein Teil der Kanäle an dem dem Abgaszuführrohr zugewandten Ende und der andere Teil an dem dem Abgasableitungsrohr zugewandten Ende verschlossen ist. Die Kanäle sind durch poröse Wände voneinander getrennt. An den dem Abgaszuführrohr abgewandten verschlossenen Enden der Kanäle sind elektrische Heizelemente angeordnet.

Die Heizelemente befinden sich somit in einer Zone des Partikelfilters, in welcher nur eine geringe Gasbewegung stattfindet, so dass beim Aufheizen der Heizelemente kaum ein Abtransport der Wärme durch Gasströmung erfolgt. Der Wärmestau sorgt somit zu einer Zündung der abgelagerten Rußpartikel und somit zu einer Einleitung der Regeneration des Partikelfilters.

Aufgabe der Erfindung ist es, ein Verfahren zum Betreiben eines Diesel-Partikelfilters zu schaffen, mit dem eine weitere Senkung der HC- und CO-Bestandteile des Abgases, insbesondere beim Kaltstart einer Dieselbrennkraftmaschine, erzielt wird und die Zuverlässigkeit der Filter-Regeneration erhöht wird.

Es ist weiterhin Aufgabe der Erfindung, eine Einrichtung zur Durchführung eines solchen Verfahrens zu schaffen, welche den Betrieb der Brennkraftmaschine, ohne dadurch bedingte zusätzliche Komplikationen, ermöglicht.

Erfindungsgemäß wird der erste Teil dieser Aufgabe gelöst mit den Merkmalen des Patentanspruches 1.

Gegenstand des Anspruches 2 ist eine vorteilhafte Weiterbildung der Erfindung.

Der zweite Teil der vorgenannten Aufgabe wird erfindungsgemäß mit den Merkmalen des Anspruches 3 gelöst.

Der Anspruch 4 hat eine vorteilhafte Weiterbildung der Einrichtung nach Anspruch 3 zum Gegenstand.

In dem vor dem eigentlichen Start der Brennkraftmaschine, also vor den ersten Startumdrehungen durch den Anlassmotor, die im Partikelfilter angeordneten Heizmittel zumindest partiell auf eine Temperatur gebracht werden, die für ein Entzünden der an dieser Stelle abgelagerter Partikel ausreichend ist. Dabei wurde erkannt, dass infolge fehlender Durchströmung des Partikelfilters vor dem Start der Brennkraftmaschine diese Temperatur durch Wärmestau relativ schnell und mit vertretbarem Energieaufwand erzielt wird. Durch eine katalytische Beschichtung des Filterkörpers kann die Anspringtemperatur reduziert werden, so dass die Zeit für das Entzünden weiter verkürzt wird.

Vor allem in der Startphase der Brennkraftmaschine innerhalb der ersten 250 Betriebs-Sekunden ist damit eine erhebliche Reduzierung der HC-Emission sowie auch der CO-Emission realisierbar.

Die Auswirkung des erfindungsgemäßen Verfahrens auf die Abgasemission einer in einem Kraftfahrzeug eingesetzten Diesel-Brennkraftmaschine sind beispielhaft durch die Zeichnungen dargestellt. Es zeigen
- Fig. 1: ein Schaubild eines standardisierten Startvorganges mit der Darstellung der dabei auftretenden HC-Emission;
- Fig. 2: ein Schaubild eines standardisierten Startvorganges mit der Darstellung der dabei auftretenden CO-Emission.

Auf der Abszisse beider Schaubilder ist die Zeit (t) in Sekunden aufgetragen. Die rechte Ordinate ist mit einer Skala der mit dem Kraftfahrzeug beim Startvorgang erzielten Geschwindigkeit (v) in Kilometer/Stunde versehen.

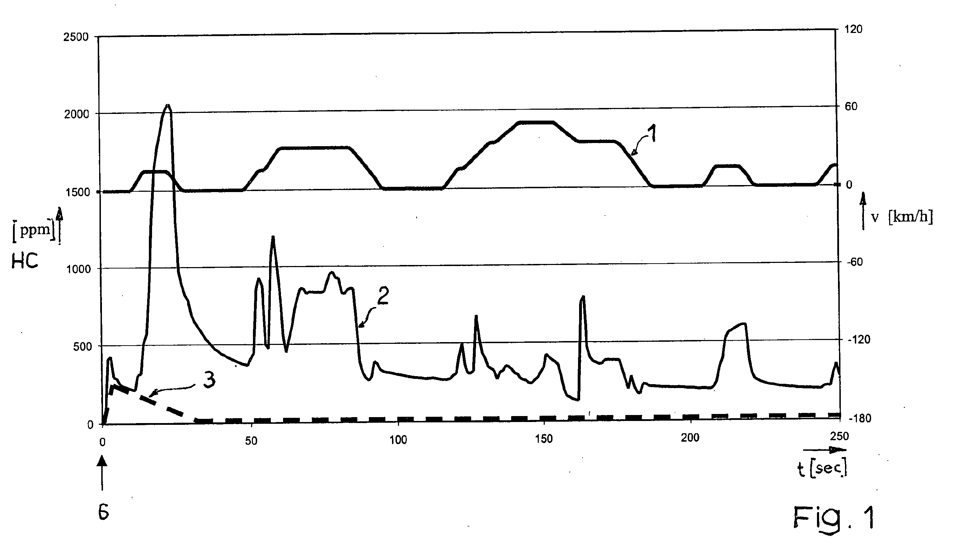

Im Schaubild nach Figur 1 trägt die linke Ordinate eine Skala in parts per million (ppm) der HC-Bestandteile in der Abgas-Emission.

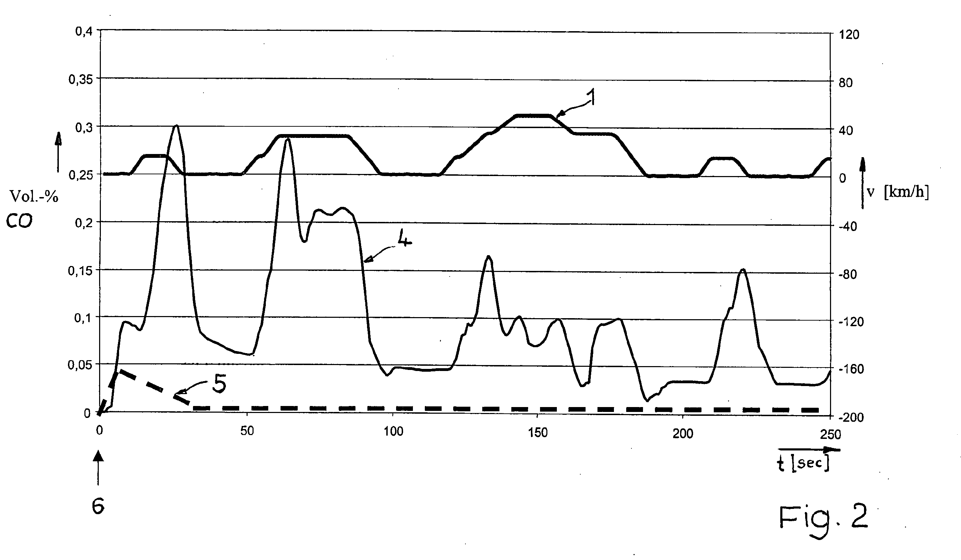

Im Schaubild nach Figur 2 trägt die linke Ordinate eine Skala in Volumen-Prozent (Vol.-%) des CO-Bestandteils in der Abgasemission.

Beide Schaubilder zeigen mit jeweils einem durchgehenden Linienzug 1 den Verlauf der Fahrgeschwindigkeit v während eines Startvorganges über eine Zeitdauer t von 250 Sekunden.

Im Schaubild nach Figur 1 ist dazu mit einem durchgehenden Linienzug 2 der HC-Anteil der Abgasemission in ppm aufgetragen bei einem Betrieb des Partikelfilters ohne das erfindungsgemäße Verfahren.

Mit einem gestrichelten Linienzug 3 ist dagegen der HC-Anteil der Abgasemission in ppm aufgetragen, wenn gemäß der Erfindung vor dem eigentlichen Start der Brennkraftmaschine die Heizmittel des Partikelfilters auf eine Temperatur größer als 500° C gebracht wurden.

In analoger Weise zeigt das Schaubild nach Figur 2 die Verhältnisse des CO-Anteils im Abgas, wobei der durchgehende Linienzug 4 den CO-Anteil des Abgases ohne Anwendung der Erfindung zeigt. Der gestrichelte Linienzug 5 zeigt dagegen den CO-Anteil des Abgases in Volumenprozent mit Anwendung der erfindungsgemäßen Lehre.

Mit 6 ist in beiden Schaubildern der Punkt des Startens der Brennkraftmaschine bezeichnet.

Eine Einrichtung zur Durchführung des erfindungsgemäßen Verfahrens kann darin bestehen, dass die jeweils aktuelle Temperatur am Heizmittel durch einen Sensor erfasst und einem elektronischen Steuergerät zum Ansteuern des Anlassmotors der Brennkraftmaschine zugeleitet wird. Erst bei Überschreiten einer definierten Temperaturschwelle wird durch das Steuergerät die Energie für den Anlassmotor freigegeben.

Eine weitere beispielhafte Möglichkeit für eine Einrichtung zur Durchführung des Verfahrens besteht darin, dass ein zum Aufheizen der Heizmittel dienender elektrischer Strom in zugemessener Stärke über eine definierte Zeit zugeführt wird, bevor die Energie für den Anlassmotor durch das Steuergerät freigegeben wird.

## Patentansprüche

1. Verfahren zum Betreiben eines Partikelfilters in der Abgasanlage einer Diesel-Brennkraftmaschine mit einem keramischen Filterkörper und elektrischen Heizmitteln an Partikelablagerungsstellen des Filterkörpers, **dadurch gekennzeichnet, dass** die elektrischen Heizmittel vor dem Startvorgang der Brennkraftmaschine aktiviert werden.

2. Verfahren nach Anspruch 1, **dadurch gekennzeichnet, dass** die Heizmittel zumindest punktuell auf eine Temperatur größer als die Partikel-Zündungstemperatur gebracht werden, bevor der Startvorgang der Brennkraftmaschine beginnt.

3. Einrichtung zur Durchführung des Verfahrens nach Anspruch 1 oder 2, **dadurch gekennzeichnet, dass** die elektrischen Heizmittel mit einer Sensorik zum Erfassen der aktuellen Temperatur versehen sind und dem Anlassmotor der Brennkraftmaschine ein elektrisches Steuerteil zugeordnet ist, welches die Sensorik derart auswertet, dass der Anlassmotor erst nach Erreichen einer vorgegebenen erhöhten Temperatur an den Heizmitteln gestartet wird.

4. Einrichtung nach Anspruch 3, **dadurch gekennzeichnet, dass** die vorgegebene erhöhte Temperatur der Heizmittel vor dem Start der Brennkraftmaschine mehr als 500° C beträgt.

5. Einrichtung nach Anspruch 3 und 4, **dadurch gekennzeichnet, dass** der Filterkörper des Partikelfilters katalytisch beschichtet ist.
